(19) Europäisches Patentamt
European Patent Office
Office européen des brevets

(11) **EP 4 311 234 A1**

(12) **EUROPEAN PATENT APPLICATION**

(43) Date of publication:
**24.01.2024 Bulletin 2024/04**

(21) Application number: **23185459.7**

(22) Date of filing: **14.07.2023**

(51) International Patent Classification (IPC):
**H04N 13/167** (2018.01)    **H04N 13/00** (2018.01)

(52) Cooperative Patent Classification (CPC):
**H04N 13/167**; G06T 2207/10016;
G06T 2207/10028; G06T 2207/20081;
G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.07.2022 FI 20225672**

(71) Applicant: **Nokia Technologies Oy
02610 Espoo (FI)**

(72) Inventors:
• **FASOGBON, Peter Oluwanisola**
  Tampere (FI)
• **ZHANG, Honglei**
  Tampere (FI)
• **CRICRÌ, Francesco**
  Tampere (FI)
• **REZAZADEGAN TAVAKOLI, Hamed**
  Espoo (FI)

(74) Representative: **Nokia EPO representatives
Nokia Technologies Oy
Karakaari 7
02610 Espoo (FI)**

(54) **A METHOD, AN APPARATUS AND A COMPUTER PROGRAM PRODUCT FOR VOLUMETRIC VIDEO SYNCHRONIZATION USING SPATIAL NEURAL ATTENTION NETWORK**

(57)    There is disclosed an apparatus and a method for spatial computing service session description for volumetric XR conversation. In accordance an embodiment the method comprises receiving volumetric video data from a plurality of sources, the volumetric video data comprising texture images and depth images representing at least a part of a scene; extracting feature tensors from the volumetric video data; and using the feature tensors to temporally align the volumetric video data received from the plurality of sources.

Fig. 10a

**Description**

Technical Field

The present solution generally relates to an apparatus and a method for volumetric video synchronization using spatial neural attention network.

Background

Volumetric video data represents a three-dimensional (3D) scene or object, and can be used as input for AR (Augmented Reality), VR (Virtual Reality), XR (Extended Reality) and MR (Mixed Reality) applications. Such data describes geometry (shape, size, position in 3D space) and respective attributes (e.g., color, opacity, reflectance, ...), and any possible temporal transformations of the geometry and attributes at given time instances (like frames in 2D video). Volumetric video can be generated from 3D models, also referred to as volumetric visual objects, i.e., CGI (Computer Generated Imagery), or captured from real-world scenes using a variety of capture solutions, e.g., multi-camera, laser scan, combination of video and dedicated depth sensors, and more. Also, a combination of CGI and real-world data is possible. Examples of representation formats for volumetric data comprise triangle meshes, point clouds, or voxels. Temporal information about the scene can be included in the form of individual capture instances, i.e., "frames" in 2D video, or other means, e.g., position of an object as a function of time.

Volumetric capture technology is a technique that digitizes a three-dimensional space (i.e., the volume of space), object, or environment in real-time using an array of cameras set around a target. The use of RGB-D cameras (red-green-blue-depth) is particularly popular thanks to accuracy in the depth images from some RGB-D cameras. Such RGB-D cameras depict an object or a scene and the captured RGBD information is digitized (e.g a point cloud is created), and the digitized information is transferred to a web, a mobile device or devices, and/or to virtual worlds to be viewed in three-dimensional (3D) format. What makes volumetric video interesting is that the final product may not have a set of fixed viewpoints, so the end-user can watch and interact with the content by freely viewing it from different (even all possible) angles or positions, enhancing their experience and heightening their sense of immersion and engagement.

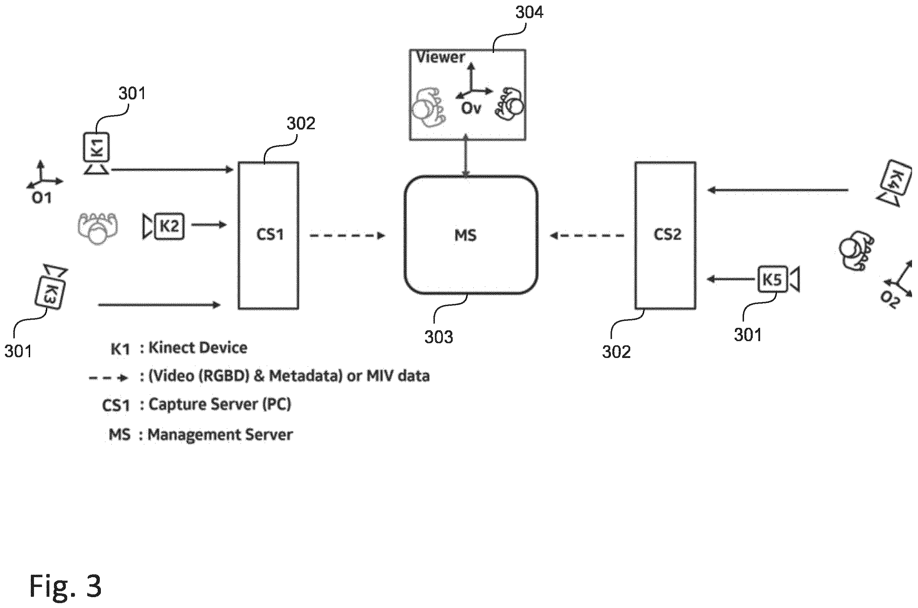

Fig. 3 illustrates an architecture that can be used to support XR volumetric conversation that utilizes a management server (MS). The K1, K2, K3, K4 and K5 are capture devices 301, for example devices that capture texture (RGB) plus depth (D), i.e. RGB-D, information of a scene. The capture devices 301 are in fixed positions (i.e. world locked). Each capture device sends video (RGB-D) and metadata (e.g. camera intrinsic and extrinsic information) from a single capture position (e.g., for capturing a person) in the scene via corresponding capture server 302 (e.g. CS1, CS2) to the management server 303 (e.g. MS). Video and metadata information allow to reenact/reproduce the capture scene at a viewer's 304 side. One task of the capture server is to combine information from separate capture devices into one data stream, which allow to locally synchronize those devices, thus providing spatial grouping information for the metadata.

One problem in this kind of system is that when technology becomes more advanced and consumers start to fully embrace volumetric real-time conversation system, a scenario may be envisaged where the capture server(s) is/are not available. The removal of the capturing servers may lead to unsynchronized devices both in terms of location synchronization and temporal synchronization. The location synchronization may be determined by detecting neural features of human and accepting video feature correspondences with higher probability. While location sync. may be straightforward, video temporal synchronization can be very cumbersome.

Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

Various aspects include a method, an apparatus and a computer readable medium comprising a computer program stored therein, which are characterized by what is stated in the independent claims. Various embodiments are disclosed in the dependent claims.

In accordance with some embodiments, the volumetric video synchronization (i.e. temporal synchronization) problem is solved by using spatial neural attention-based method. In some embodiments, a video offset parameter is provided that can be incorporated into a session description file, and a system can be placed inside a media server located in a Spatial Computing Service (SCS).

In accordance with some embodiments, a spatial attention network method is utilized to implicitly extract pose information and solve the temporal synchronization problem. The method provides an offset that can be applied to arriving streams. The method can be implemented in a server, at an entry point of arriving videos from devices. The method may then be applied on the videos with the same spatial grouping index to determine their corresponding temporal offset.

In summary, a method has been developed exploiting view-invariant human pose features and a neural attention network to infer the time offset (in terms of frames) required to synchronize volumetric video capture. Also a diagonal cost representation may be utilized which introduces additional spatial encoding in an attention module.

This work is to support real-time volumetric conversation system architecture whereby there is no synchronization between individual local devices sending streamed data (RGB-D and metadata) to a common server.

According to a first aspect, there is provided an apparatus comprising

means for receiving volumetric video data from a plurality of sources, the volumetric video data comprising texture images and depth images representing at least a part of a scene;
means for extracting feature tensors from the volumetric video data; and
means for using the feature tensors to temporally align the volumetric video data received from the plurality of sources.

In accordance with some embodiments, the apparatus comprises means for forming a set of assignment matrices including information on temporal offsets among the received volumetric video data;

means for using the set of assignment matrices to determine the temporal offsets; and
means for using the temporal offsets to temporally adjust the received volumetric video data received from the plurality of sources to make the volumetric video data received from the plurality of sources temporally aligned.

According to a second aspect, there is provided a method comprising

receiving volumetric video data from a plurality of sources, the volumetric video data comprising color images and depth images representing at least a part of a scene;
extracting feature tensors from the volumetric video data; and
using the feature tensors to temporally align the volumetric video data received from the plurality of sources.

In accordance with some embodiments, the method comprises:

forming a set of assignment matrices including information on temporal offsets among the received volumetric video data;
using the set of assignment matrices to determine the temporal offsets; and
using the temporal offsets to temporally adjust the received volumetric video data received from the plurality of sources to make the volumetric video data received from the plurality of sources temporally aligned.

According to a third aspect, there is provided an apparatus comprising at least one processor, memory including computer program code, the memory and the computer program code configured to, with the at least one processor, cause the apparatus to perform at least the following:

receive volumetric video data from a plurality of sources, the volumetric video data comprising color images and depth images representing at least a part of a scene;
extract feature tensors from the volumetric video data; and
use the feature tensors to temporally align the volumetric video data received from the plurality of sources.

In accordance with some embodiments, said memory includes computer program code, the memory and the computer program code configured to, with the at least one processor, cause the apparatus to use the feature tensors to:

form a set of assignment matrices including information on temporal offsets among the received volumetric video data;
use the set of assignment matrices to determine the temporal offsets; and
use the temporal offsets to temporally adjust the received volumetric video data received from the plurality of sources to make the volumetric video data received from the plurality of sources temporally aligned.

According to fourth aspect, there is provided computer program product comprising computer program code configured to, when executed on at least one processor, cause an apparatus or a system to

receive volumetric video data from a plurality of sources, the volumetric video data comprising color images and depth images representing at least a part of a scene;

extract feature tensors from the volumetric video data; and
use the feature tensors to temporally align the volumetric video data received from the plurality of sources.

In accordance with some embodiments, said computer program code includes computer program code, when executed by at least one processor, cause the apparatus to use the feature tensors to:

form a set of assignment matrices including information on temporal offsets among the received volumetric video data;
use the set of assignment matrices to determine out the temporal offsets; and
use the temporal offsets to temporally adjust the received volumetric video data received from the plurality of sources to make the volumetric video data received from the plurality of sources temporally aligned.

According to an embodiment, the computer program product is embodied on a non-transitory computer readable medium.

Description of the Drawings

In the following, various embodiments will be described in more detail with reference to the appended drawings, in which

Fig. 1      shows an example of a compression process of a volumetric video;

Fig. 2      shows an example of a de-compression process of a volumetric video;

Fig. 3      illustrates an architecture that can be used to support XR volumetric conversation that utilizes a management server;

Fig. 4      illustrates a cloud based architecture arrangement according to an embodiment suitable for volumetric XR conversation system;

Fig. 5      illustrates an overview of a system for volumetric video temporal synchronization, in accordance with an embodiment;

Fig. 6a      depicts an architecture of an attention module with assignment matrix, in accordance with an embodiment;

Fig. 6b      depicts contents of a multi-head cross-frame attention, in accordance with an embodiment;

Fig. 7      is an illustration of a repeating off-diagonal element of a matrix, in accordance with an embodiment;

Fig. 8      illustrates an example assignment matrix representation and frame offset shifting process from an assignment matrix output, in accordance with an embodiment;

Fig. 9      is an illustration of a SoftMax operation pass with a filtering process;

Fig. 10a      is a flowchart illustrating a method according to an embodiment;

Fig. 10b      is a flowchart illustrating a method according to a further embodiment; and

Fig. 11      shows an example of an apparatus.

Description of Example Embodiments

The following description and drawings are illustrative and are not to be construed as unnecessarily limiting. The specific details are provided for a thorough understanding of the disclosure. However, in certain instances, well-known or conventional details are not described in order to avoid obscuring the description. References to one or an embodiment in the present disclosure can be, but not necessarily are, reference to the same embodiment and such references mean at least one of the embodiments.

Reference in this specification to "one embodiment" or "an embodiment" means that a particular feature, structure, or characteristic described in connection with the embodiment is included in at least one embodiment of the disclosure.

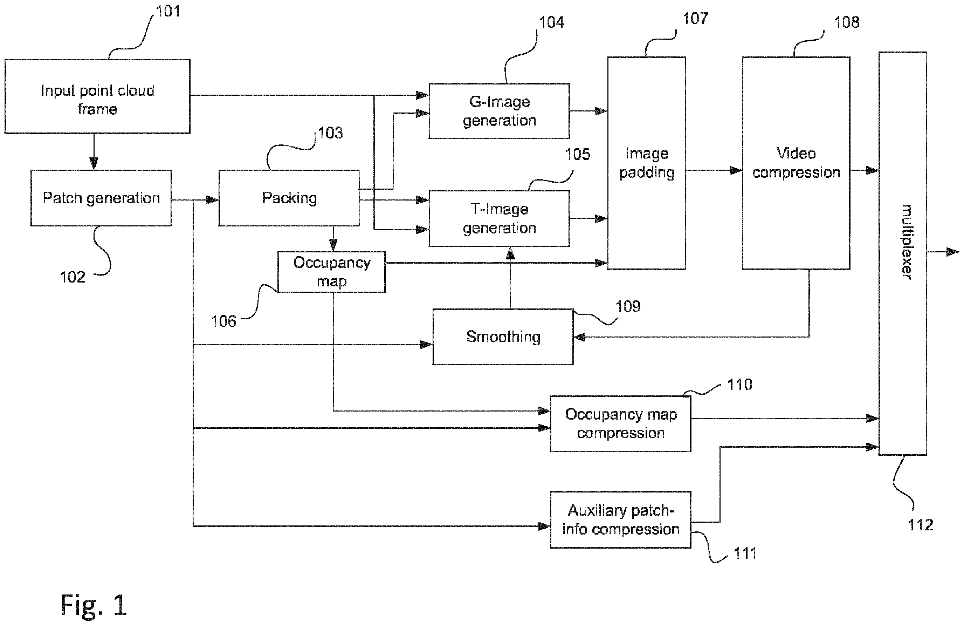

Fig. 1 illustrates an overview of an example of a compression process of a volumetric video. Such process may be applied for example in MPEG Video-based Point Cloud Coding (V-PCC). The process starts with an input point cloud frame 101 that is provided for patch generation 102, geometry image generation 104 and texture image generation 105.

The patch generation 102 process aims at decomposing the point cloud into a minimum number of patches with smooth boundaries, while also minimizing the reconstruction error. For patch generation, the normal at every point can be estimated. An initial clustering of the point cloud can then be obtained by associating each point with one of the following six oriented planes, defined by their normals:

- (1.0, 0.0, 0.0),
- (0.0, 1.0, 0.0),
- (0.0, 0.0, 1.0),
- (-1.0, 0.0, 0.0),
- (0.0, -1.0, 0.0), and
- (0.0, 0.0, -1.0)

More precisely, each point may be associated with the plane that has the closest normal (i.e., maximizes the dot product of the point normal and the plane normal).

The initial clustering may then be refined by iteratively updating the cluster index associated with each point based on its normal and the cluster indices of its nearest neighbors. The final step may comprise extracting patches by applying a connected component extraction procedure.

Patch info determined at patch generation 102 for the input point cloud frame 101 is delivered to packing process 103, to geometry image generation 104 and to texture image generation 105. The packing process 103 aims at mapping the extracted patches onto a 2D plane, while trying to minimize the unused space, and guaranteeing that every $T \times T$ (e.g., $16 \times 16$) block of the grid is associated with a unique patch. It should be noticed that T may be a user-defined parameter. Parameter $T$ may be encoded in the bitstream and sent to the decoder.

The used simple packing strategy iteratively tries to insert patches into a $W \times H$ grid. $W$ and $H$ may be user-defined parameters, which correspond to the resolution of the geometry/texture images that will be encoded. The patch location is determined through an exhaustive search that is performed in raster scan order. The first location that can guarantee an overlapping-free insertion of the patch is selected and the grid cells covered by the patch are marked as used. If no empty space in the current resolution image can fit a patch, then the height $H$ of the grid may be temporarily doubled, and search is applied again. At the end of the process, $H$ is clipped so as to fit the used grid cells.

The geometry image generation 104 and the texture image generation 105 are configured to generate geometry images and texture images respectively. The image generation process may exploit the 3D to 2D mapping computed during the packing process to store the geometry and texture of the point cloud as images. In order to better handle the case of multiple points being projected to the same pixel, each patch may be projected onto two images, referred to as layers. For example, let $H(u, y)$ be the set of points of the current patch that get projected to the same pixel $(u, v)$. The first layer, also called a near layer, stores the point of $H(u, v)$ with the lowest depth $D0$. The second layer, referred to as the far layer, captures the point of $H(u, v)$ with the highest depth within the interval $[D0, D0+\Delta]$, where $\Delta$ is a user-defined parameter that describes the surface thickness. The generated videos may have the following characteristics:

- Geometry: WxH YUV420-8bit,
- Texture: WxH YUV420-8bit,

It is to be noticed that the geometry video is monochromatic. In addition, the texture generation procedure exploits the reconstructed/smoothed geometry in order to compute the colors to be associated with the re-sampled points.

The geometry images and the texture images may be provided to image padding 107. The image padding 107 may also receive as an input an occupancy map (OM) 106 to be used with the geometry images and texture images. The occupancy map 106 may comprise a binary map that indicates for each cell of the grid whether it belongs to the empty space or to the point cloud. In other words, the occupancy map (OM) may be a binary image of binary values where the occupied pixels and non-occupied pixels are distinguished and depicted respectively. The occupancy map may alternatively comprise a non-binary image allowing additional information to be stored in it. Therefore, the representative values of the DOM (Deep Occupancy Map) may comprise binary values or other values, for example integer values. It should be noticed that one cell of the 2D grid may produce a pixel during the image generation process. Such an occupancy map may be derived from the packing process 103.

The padding process 107 aims at filling the empty space between patches in order to generate a piecewise smooth image suited for video compression. For example, in a simple padding strategy, each block of $T \times T$ (e.g., 16x16) pixels is compressed independently. If the block is empty (i.e., unoccupied, i.e., all its pixels belong to empty space), then the pixels of the block are filled by copying either the last row or column of the previous $T \times T$ block in raster order. If the block is full (i.e., occupied, i.e., no empty pixels), nothing is done. If the block has both empty and filled pixels (i.e., edge block), then the empty pixels are iteratively filled with the average value of their non-empty neighbors.

The padded geometry images and padded texture images may be provided for video compression 108. The generated images/layers may be stored as video frames and compressed using for example the HM16.16 video codec according to the HM configurations provided as parameters. The video compression 108 also generates reconstructed geometry images to be provided for smoothing 109, wherein a smoothed geometry is determined based on the reconstructed geometry images and patch info from the patch generation 102. The smoothed geometry may be provided to texture image generation 105 to adapt the texture images.

The patch may be associated with auxiliary information being encoded/decoded for each patch as metadata. The auxiliary information may comprise index of the projection plane, 2D bounding box, 3D location of the patch.

For example, the following metadata may be encoded/decoded for every patch:

- index of the projection plane

    o Index 0 for the planes (1.0, 0.0, 0.0) and (-1.0, 0.0, 0.0)
    o Index 1 for the planes (0.0, 1.0, 0.0) and (0.0, -1.0, 0.0)
    o Index 2 for the planes (0.0, 0.0, 1.0) and (0.0, 0.0, -1.0)

- 2D bounding box *(u0, v0, u1, v1)*
- 3D location *(x0, y0, z0)* of the patch represented in terms of depth $\delta0$, tangential shift *s0* and bitangential shift *r0*. According to the chosen projection planes, $(\delta0, s0, r0)$ may be calculated as follows:

    o Index 0, $\delta0= x0$, *s0=z0* and *r0 = y0*
    o Index 1, $\delta0= y0$, *s0=z0* and *r0 = x0*
    o Index 2, $\delta0= z0$, *s0=x0* and *r0 = y0*

Also, mapping information provided for each $T \times T$ block its associated patch index may be encoded as follows:

- For each $T \times T$ block, let *L* be the ordered list of the indexes of the patches such that their 2D bounding box contains that block. The order in the list is the same as the order used to encode the 2D bounding boxes. *L* is called the list of candidate patches.
- The empty space between patches is considered as a patch and is assigned the special index 0, which is added to the candidate patches list of all the blocks.
- Let *I* be index of the patch, which the current $T \times T$ block belongs to, and let *J* be the position of *I* in *L*. Instead of explicitly coding the index *I*, its position *J* is arithmetically encoded instead, which leads to better compression efficiency.

The occupancy map consists of a binary map that indicates for each cell of the grid whether it belongs to the empty space or to the point cloud. One cell of the 2D grid produces a pixel during the image generation process.

The occupancy map compression 110 leverages the auxiliary information described in previous section, in order to detect the empty $T \times T$ blocks (i.e., blocks with patch index 0). The remaining blocks may be encoded as follows: The occupancy map can be encoded with a precision of a $B0 \times B0$ blocks. *B0* is a configurable parameter. In order to achieve lossless encoding, *B0* may be set to 1. In practice *B0=2* or *B0=4* results in visually acceptable results, while significantly reducing the number of bits required to encode the occupancy map.

The compression process may comprise one or more of the following example operations:

- Binary values may be associated with $B0 \times B0$ sub-blocks belonging to the same $T \times T$ block. A value 1 associated with a sub-block, if it contains at least a non-padded pixel, and 0 otherwise. If a sub-block has a value of 1 it is said to be full, otherwise it is an empty sub-block.
- If all the sub-blocks of a $T \times T$ block are full (i.e., have value 1). The block is said to be full. Otherwise, the block is said to be non-full.
- A binary information may be encoded for each $T \times T$ block to indicate whether it is full or not.
- If the block is non-full, an extra information indicating the location of the full/empty sub-blocks may be encoded as follows:
- Different traversal orders may be defined for the sub-blocks, for example horizontally, vertically, or diagonally starting from top right or top left corner
- The encoder chooses one of the traversal orders and may explicitly signal its index in the bitstream.

- The binary values associated with the sub-blocks may be encoded by using a run-length encoding strategy.

  - The binary value of the initial sub-block is encoded.
  - Continuous runs of 0s and 1s are detected, while following the traversal order selected by the encoder.
  - The number of detected runs is encoded.
  - The length of each run, except of the last one, is also encoded.

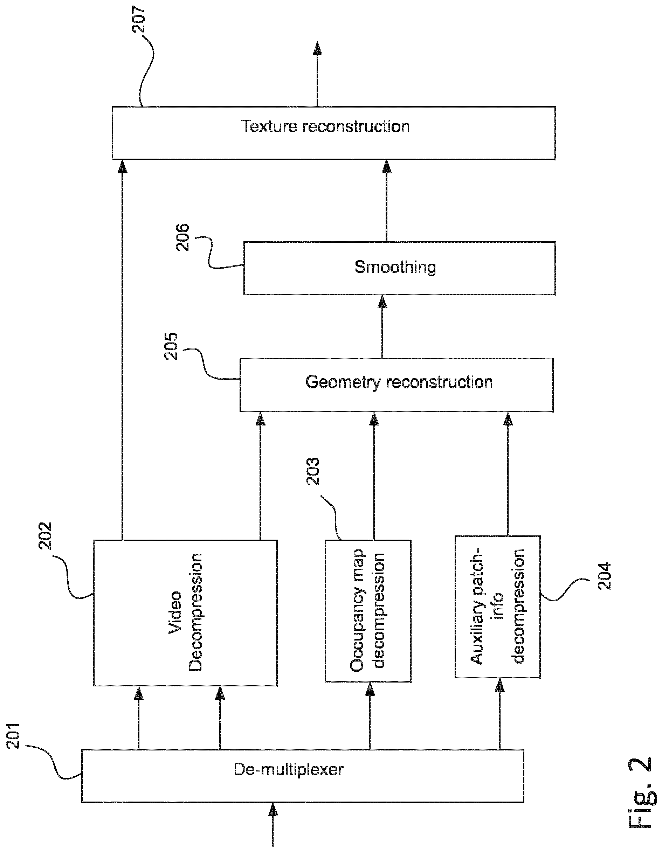

Fig. 2 illustrates an overview of a de-compression process for MPEG Video-based Point Cloud Coding (V-PCC). A de-multiplexer 201 receives a compressed bitstream, and after de-multiplexing, provides compressed texture video and compressed geometry video to video decompression 202. In addition, the de-multiplexer 201 transmits compressed occupancy map to occupancy map decompression 203. It may also transmit a compressed auxiliary patch information to auxiliary patch-info compression 204. Decompressed geometry video from the video decompression 202 is delivered to geometry reconstruction 205, as are the decompressed occupancy map and decompressed auxiliary patch information. The point cloud geometry reconstruction 205 process exploits the occupancy map information in order to detect the non-empty pixels in the geometry/texture images/layers. The 3D positions of the points associated with those pixels may be computed by leveraging the auxiliary patch information and the geometry images.

The reconstructed geometry image may be provided for smoothing 206, which aims at alleviating potential discontinuities that may arise at the patch boundaries due to compression artifacts. The implemented approach moves boundary points to the centroid of their nearest neighbors. The smoothed geometry may be transmitted to texture reconstruction 207, which also receives a decompressed texture video from video decompression 202. The texture reconstruction 207 outputs a reconstructed point cloud. The texture values for the texture reconstruction are directly read from the texture images.

The point cloud geometry reconstruction process exploits the occupancy map information in order to detect the non-empty pixels in the geometry/texture images/layers. The 3D positions of the points associated with those pixels are computed by levering the auxiliary patch information and the geometry images. More precisely, let $P$ be the point associated with the pixel $(u, v)$ and let $(\delta 0, s0, r0)$ be the 3D location of the patch to which it belongs and $(u0, v0, u1, v1)$ its 2D bounding box. $P$ can be expressed in terms of depth $\delta(u, v)$, tangential shift $s(u, v)$ and bi-tangential shift $r(u, v)$ as follows:

$$\delta(u, v) = \delta 0 + g(u, v)$$

$$s(u, v) = s0 - u0 + u$$

$$r(u, v) = r0 - v0 + v$$

where $g(u, v)$ is the luma component of the geometry image.

For the texture reconstruction, the texture values can be directly read from the texture images. The result of the decoding process is a 3D point cloud reconstruction.

In one example, the video and metadata information can be represented according to MPEG immersive video (MIV) format, defined in ISO/IEC 23090-12, such that each camera geometry (comprising the depth image) and texture (comprising the color image) information can be represented by one or more patches in one atlas, or can be represented by independent atlases.

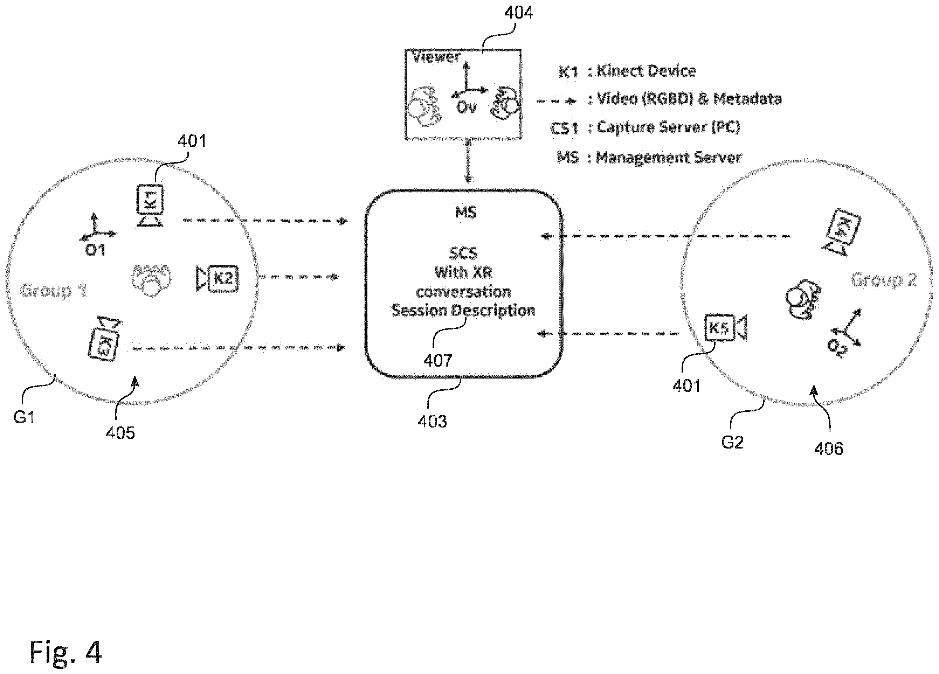

Fig. 4 illustrates a cloud based architecture arrangement that can be used to support XR volumetric conversation system where the capture servers CS1 and CS2 of the system of Fig. 3 have been removed thus leading to unsynchronized capture of video data. In this architecture, the camera devices 401 (also referred with K1, K2, ...,K5 in this specification) at multiple locations 405, 406 may directly send RGB-D streams (or MIV representation) from camera onboard software to a spatial computing server 403 (also referred with SCS or media server in this specification). The spatial computing server SCS receives the stream data and determines spatial grouping attributes of the connected devices K1, K2, ..., K5. After the determination the spatial computing server SCS may send stream data to a viewer device 404, wherein the viewer device 404 may then reenact/reproduce the scene. Alternatively, the spatial computing server SCS may stream the output directly to the viewer device 404.

The spatial computing server SCS may group multiple media streams (or 3D video metadata) together for semantical understanding. For example, the streams from cameras K1, K2 and K3 in Fig. 4 would form a Spatial Group 1 and K4 and K5 would form a Spatial Group 2. As a result, the Group Index can be used in a Session Description Protocol (SDP) for grouping the media streams. For example, a special group parameter called "Volumetric capture_group" (e.g **svcs_group**) can be used as follows:

$$\text{"Volumetric\_capture\_group"} = \textit{mid\_K1\_rgb}\ \textit{mid\_K2\_rgb}\ \textit{mid\_K1\_depth}\ \textit{mid\_K2\_depth}\ ...$$

where *mid_K1_rgb* is the mid of the RGB video stream from the first camera device K1 and *mid_K1_depth* is the mid of the depth media stream from the first camera device K1. In an embodiment, the streams may require synchronization and the synchronization anchor can be the first media stream in the list, for example. The *volumetric_capture_group* parameter indicates that the cameras are capturing the same physical space and the media streams can be combined by the cloud server or the receiver for generating 3D reconstruction.

The *group id* parameter or the *volumetric_capture_group* (e.g **svcs_group**) parameter can be estimated using a neural network method. A suitable approach may be to learn features from streamed video data (RGB-D), then using a neural based method to classify the learned features into location specific. To improve the approach, the neural network can be trained to extract features from both depth and colors representing a human in the scene as a reference object.

The spatial computing server SCS may have received intrinsic and extrinsic parameters from the devices K1, K2, ..., K5. Based on the extrinsic parameters the spatial computing server SCS determines that the devices K1, K2 and K3 are located nearby each other and that the devices K4 and K5 are located nearby but at a location different from the location where the devices K1, K2 and K3 are located. Thus, in this example situation, the spatial computing server SCS has grouped the devices K1, K2 and K3 together to form a first group G1 and the devices K4 and K5 to form a second group G2.

For example, to make the determination which devices are near each other may be based on a predetermined threshold, wherein if the location of two devices reveals that these devices are closer to each other than the threshold, then it may be determined that these devices are nearby each other and can be grouped to the same group. On the other hand, if the location of two devices reveals that these devices are father from each other than the threshold, then it may be determined that these devices are not nearby each other and would be grouped to different groups. There may also be other criteria to determine whether devices are near each other. For example, if there is a separate indication that indicates a multi-camera rig the device is coupled with, those cameras which are indicated to belong the same multi-camera rig may be determined to be near each other and can be grouped to the same group.

Some of the devices 401 may have been installed to a volumetric multi-camera rig wherein the mutual position and/or pose of the devices may not change. Still each of the devices may be able to communicate with the spatial computing server SCS individually. Those devices attached with the same rig may be grouped as one group or these devices may be a part of a greater group of devices.

However, an unsynchronized location issue is needed to be resolved to determine a spatial grouping identifier. The spatial grouping identifier will be included in the session description file which will provide a hint to determine which camera rigs are in the same location. Another issue arises from unsynchronized temporal videos from individual devices belonging to the same rig in the world space. The unsynchronized location issue may be straightforward to solve and can be determined from estimating neural feature correspondences in the available videos. As a result, the following description mainly focuses on the second issue of temporal video synchronization.

For the temporal video synchronization, it can be assumed that all the camera devices are well calibrated to a central universal timeclock, but this is not sufficient to have proper synchronization that will ensure accurate extrinsic camera calibration of the multi-camera rig. For example, if multiple volumetric videos cover the same moving person in the world space, the output of a method according to an embodiment may ensure that these subjects exhibit identical pose and pose change at each aligned time point across these inter-device videos. In accordance with an embodiment, a temporal offset is determined, in terms of a number of frames, to adjust video sets from the camera rig. In some practical cases, a single multi-camera rig contains 4-8 devices, with each device providing about 130 frames, approximately 4.3 seconds given the frame rate of 29.97 Hz.

Volumetric capture usually leads to massive volume of video streams (RGB-D) from multiple devices in the multi-camera rig, especially depending on pre-set time interval of video frames. So, a system that works around that should be carefully designed. Therefore, an attention-based arrangement may help to focus on important part of the videos from multiple devices. In neural networks, attention is a technique that mimics cognitive attention. The effect enhances some parts of the video data while diminishing other parts with the thought being that the network devotes more focus to that small but important part of the data.

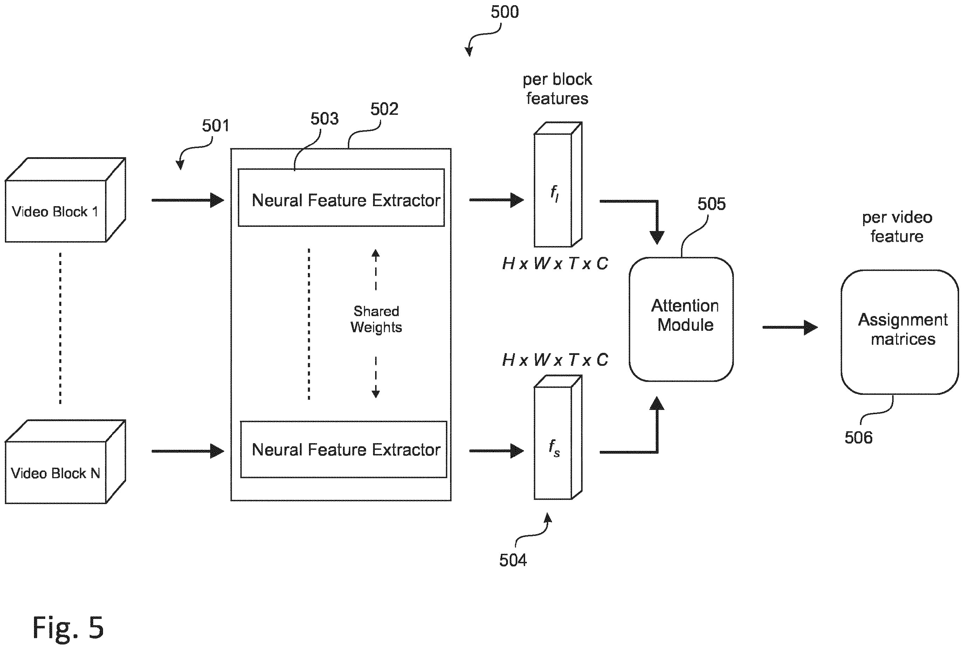

In the following, a method according to an embodiment is disclosed in connection with an apparatus 500, illustrated in Fig. 5, which includes a feature extraction module 510 and an attention-based network 520 to infer a time offset (in terms of frames) between different volumetric videos at a certain time frame by exploiting view-invariant human pose features. The attention-based framework 520 is trained in a self-supervised manner and learns to determine what to attend to in order to decide about the visual synchrony of the video in a volumetric capture setup. The attention-based network 520 aims to augment an important part of the data while neglecting redundant data through attention weight.

Fig. 5 illustrates an overview of a system for volumetric video temporal synchronization, in accordance with an embodiment. Video information is provided at an input 501 of the apparatus 500. The input video comprises N videos, or N video blocks (i.e., blocks of frames from the N videos). From each video, a feature extractor 502 extracts a feature tensor 504 by using a feature backbone 503. The feature backbone 503 may also be referred to as a Neural Feature Extractor. The feature backbone 503 forms N feature tensors 504 from the N videos or blocks of frames. The N feature tensors 504 are input to an attention module 505. The feature tensors 504 extracted from a video (or video block) have a shape Hx Wx T × C or [H,W,T,C], where H and W are the height and width of the features, respectively, T is the number of frames of the video (or video block), and C is the number of features. The dimensions H, W, C may be combined, thus the input to the attention module 505, for all videos, may be of shape [N,T,H*W*C]. The output of the attention module 505 is a set of assignment matrices, that include information on the offsets among the N videos, in terms of number of frames.

Neural Feature Extractor

The neural feature extractor 503 is tasked with extracting appropriate pose features pertaining to a human subject or another particular object inside the multi-camera rig setup. Features are, for example, parts or patterns of an object in an image which may be used to help to identify the object in the image or video. For example, a certain geometric pattern such as a rectangle have some identifiable features like edges and corners, wherein they can be called features of the geometric pattern. Features include properties like corners, edges, regions of interest points, ridges, etc. There are many feature extractors that can be employed such as VGG16, ResNet50, or alike architectures that may be trained by using a dataset collected by using a setup similar to the one considered in this specification, e.g., outside-in cameras. In one example, a feature extractor 502 may take as an input the videos from multiple cameras, provide each video to a particular neural feature extractor 503 and output a feature tensor 504 for each of the input videos. In other words, the feature tensor 504 for a certain video is obtained by conditioning the feature extractor 502 also on the other videos. The neural feature extractors 503 communicate with each other to share some information related to the videos, such as shared weights. These features are not limited to color attributes, but and/or also depth, optical flow between frames, and silhouette or segmentation, etc. may be utilized.

Attention module

The attention module 505 takes the output from the neural feature extraction 503 as its input i.e. the feature tensors 504. The feature tensors 504 comprises a matrix of elements describing different features. The attention module 505 uses the feature tensors 504 to calculate an assignment matrix 506 for each video feature. Each of the output assignment matrices 506 include information about a frame offset between videos so that one video has been selected as a reference video and the other videos are compared with the reference video to find out how much a frame of the compared video differs temporally from a corresponding frame in the reference video. The difference is expressed, for example, as a number of frames (=frame offset).

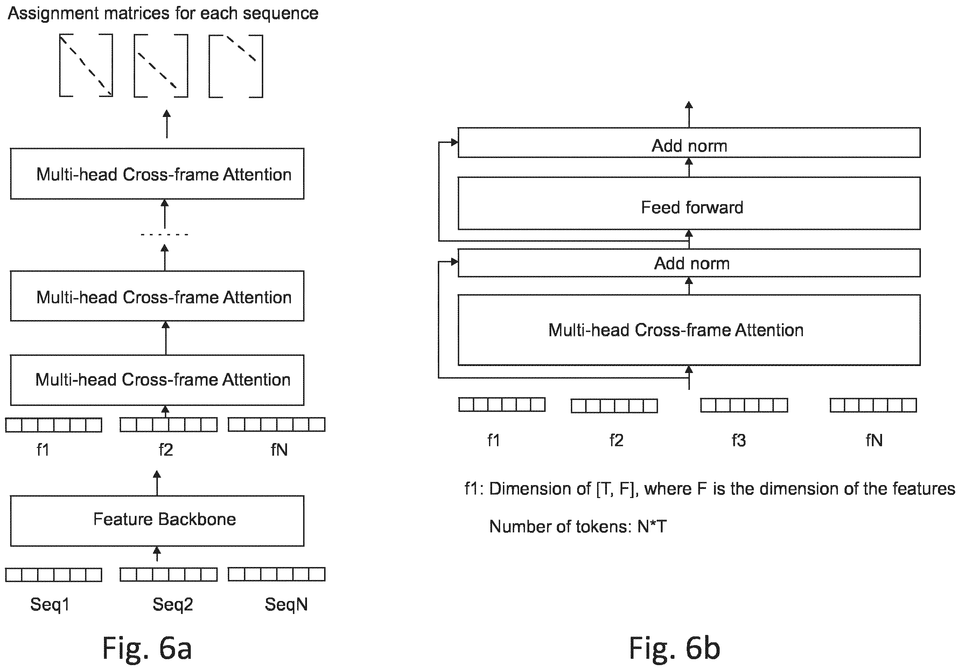

The assignment matrix 506 comprises non-zero elements in a diagonal fashion. If the video is temporally aligned with the reference video, elements of the main diagonal of the matrix are non-zero indicating the temporal alignment. Correspondingly, when there is a temporal difference between frames of the video and corresponding frames of the reference video, non-zero elements are diagonally aligned but at an offset from the main diagonal of the assignment matrix 506 i.e. the non-zero elements are either above the diagonal or below the diagonal of the matrix. The distance of such diagonally aligned element line from the diagonal of the matrix indicate the frame offset as will be explained below. In other words, the position of the off-diagonal element line with non-zero elements is the offset of two videos (in units of frames): For N video sequences, each with T frames as [N,T,HxWxC]=[N,T,F], output is N matrices for each input video, thus assignment matrices N*N, with each i-th matrix (of size TxT) indicate the temporal offset of the i-th video with respect to a reference video. Fig. 6a depicts the architecture of the attention module 505 with assignment matrix and Fig. 6b depicts contents of a multi-head cross-frame attention, in accordance with an embodiment.

In the example of Fig. 6b, an attention is drawn from features of one video sequence to features of other video sequences (Attention from video i to video j). The assignment matrix assignment_(i,j) is:

$$assign_{i,j} = diag softmax\left(\frac{Q_i^T K_j}{\sqrt{d}}\right) \quad .... \quad (1)$$

where $A = Q_i^T K_j$ is a matrix of size *TxT,* and $Q_i, K_j \in R^{F \times T}$

$$diagsoftmax(A) = M\big(softmax(\hat{A}_{(-T)}, \cdots, \hat{A}_{(T)})\big) \quad \dots \quad (2)$$

$\hat{A}_{(k)}$ is the average value of the elements on *k-th* off-diagonal of matrix A, where *k*= -T ... 0, ... , *T*

$M(\cdot)$ is the operator that generate a matrix from an array, by repeating each *i-th* value in the array along the *i-th* diagonal of the output matrix

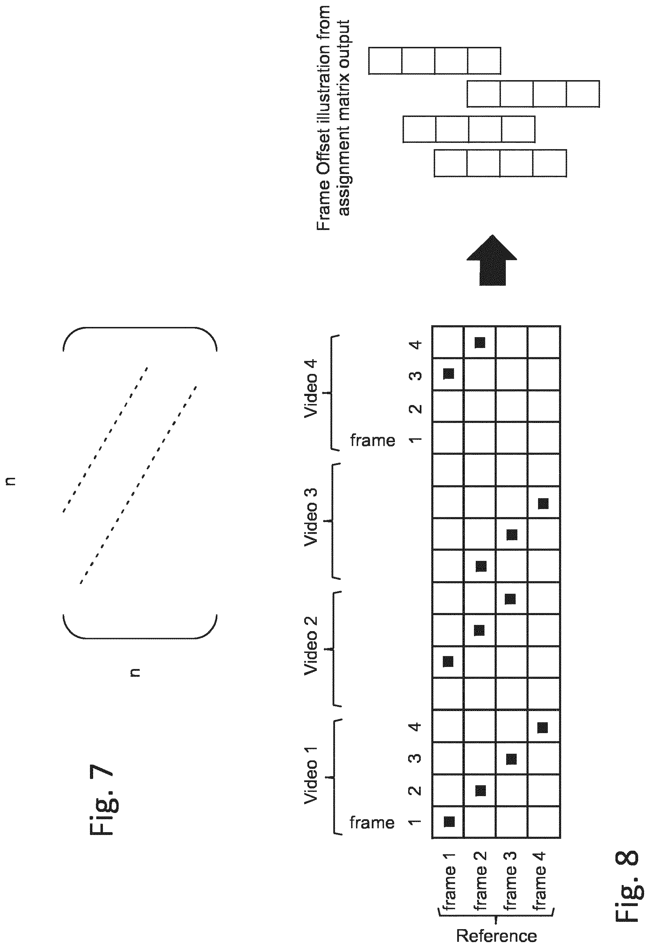

The elements on the *i-th* off-diagonal are *(1,i), (2,i+1), ...(n-i+1, n)* as is illustrated in Fig. 7.

The use of diagonal SoftMax operation may be better than a single element SoftMax operation and may suit well to the diagonal representation described in this specification.

The diagonal operation and representation may provide some inherent additional meaning/encoding that is useful for a spatial attention focus.

The softmax function, which is also known as a softargmax function or a normalized exponential function, is a generalization of the logistic function to multiple dimensions. The softmax function may be used in multinomial logistic regression and may also be used as a last activation function of a neural network to normalize the output of a network to a probability distribution over predicted output classes.

The softmax function takes as an input a vector z of certain number K of real numbers. The softmax function then normalizes the input vector z into a probability distribution consisting of K probabilities proportional to the exponentials of the input numbers. This means that prior to applying softmax some vector components could be negative, or greater than one and might not sum to 1, but after applying softmax, each component will be in the interval {0,1} and the components add up to 1 so that they can be interpreted as probabilities.

Implementation

In an example implementation, the assignment matrix over all videos can be combined and represented in the format shown in Fig. 8. In the example of Fig. 8 the left side shows an example assignment matrix representation, and the right side shows a frame offset shifting process from the assignment matrix output. Each entry in the diagonal of the assignment matrix has a value of "1". Any other values between 0 and 1 can also be used but might require tunning of a different activation layer other than softmax.

In Fig. 8, a first video 1 is defined as the reference video, as a result the offset matrix between *"reference-video1"* pair is at the main diagonal which thus signifies that no frame offset shift is required. However, video 2 diagonal entries are translated to the right which signifies a positive offset with respect to the reference video while video 3 diagonal entries are translated to the left which represents a negative offset with respect to the reference video. As can be seen from the above description, there is no need for an additional extra decision layer classification, since the frame offset is directly embedded in the assignment matrix representation. Thanks to this, it can be determined how the video frames should be offset as shown in Fig. 8, on the right.

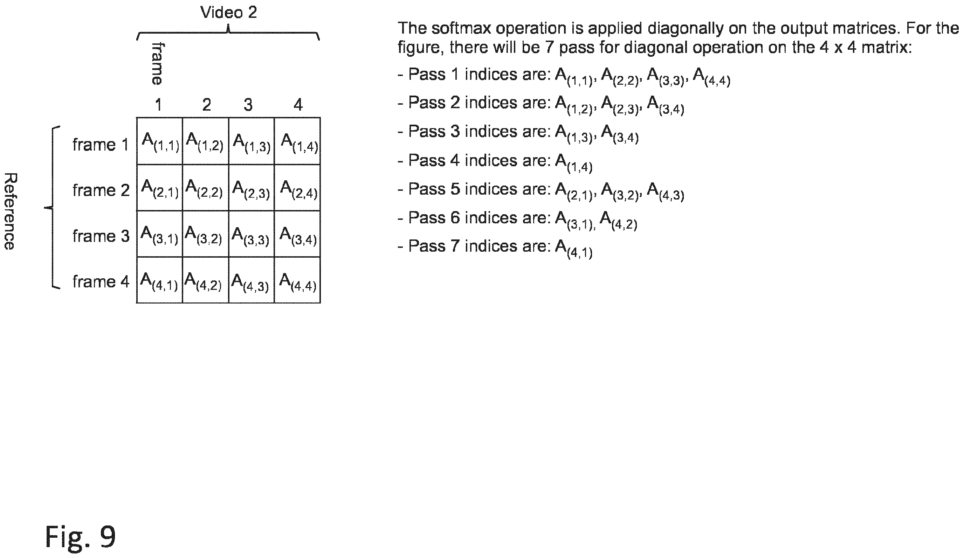

The operation regarding the diagonal softmax is pretty straightforward to implement. One example is to create a lookup table for each entry of the assignment matrix representation as is shown in Fig. 9. This figure depicts an example of a reference video 2, whereby a 4x4 matrix is extracted. Only 7 convolution operation passes are required i.e. passes 1 to 7. At each pass, the indices in the matrix A are called from the lookup table and the softmax and other operations are applied. Thereafter the output of the operation is expanded and repeated on the diagonal, which completes each diagonal operation.

Training

In one embodiment, the system may be trained in a self-supervised way. For example, there might be a decoder neural network that reconstructs some aspects of the input. In another embodiment, the system may be trained based on ground-truth data that has the same format as the output of the attention module, i.e., assignment matrices, where each ground-truth assignment matrix has one diagonal with non-zero elements (for example, all with value 1) and all other diagonals with zero elements.

In another embodiment, the system may be trained to directly estimate, for each video, a value representing the temporal alignment. In this case, the assignment matrices are first used to obtain the predicted temporal offset, and then the predicted temporal offset is used for computing the training loss based on the ground-truth temporal offset.

Feature extractors may be pretrained or may be learned jointly with the rest of the system (i.e., the attention mechanism). Some examples of pretrained feature extractors are: VGG16, ResNet50, trained on the ImageNet dataset. More specific feature extractors may be trained by using dataset collected by using a setup like the one considered in this specification, e.g., outside-in cameras. In one example, a feature extractor may take as an input the videos from multiple cameras and output a feature tensor for each of the input videos. In other words, the feature tensor for a certain video is obtained by conditioning the feature extractor also on the other videos. These features are not limited to color attributes, but and/or also depth and silhouette or segmentation.

In another embodiment, since processing videos could be lengthy and adds more to the latency in real-time applications, to alleviate this, one addition could be that prior to using the neural feature extractor 503, to speed up the computations, the video block can be passed into a feature compression block that compresses the representation of videos in the time axis first, then employ a 2D CNN (two-dimensional convolutional neural network) neural feature extraction.

In another embodiment, a cropped image (RGBD) of the subject could be directly provided instead of the whole image to speed up the process. In one example embodiment, cropped images (RGBD) are directly extracted by clipping the depth image containing foreground human subject, by defining a certain Region of Interest in 3D (also known as 3D bounding box).

In another embodiment, the frame offset do not need to be estimated at every time instance. This can rather be done at a sign-in phase of the conversation session assuming that the network is substantially stable. In another embodiment, the frame offset can be estimated at a specified or pre-determined regular interval which can occur as a form of periodic checks to validate that the conversation session is proceeding as expected.

The method and arrangement described above can be, for example, a part of Spatial Computing Service's media server. In another embodiment, the temporal offset can be affixed as a part of Session description metadata to be exchanged between a client and a server. For example, whenever RGB-D plus metadata containing spatial grouping Id (under the vcsrc_group attribute) arrive in the SCS, these data are then relayed to the method that determines proper values for the volcap-sync-offset attribute and the volcap-sync-offset attributes are then embedded as a part of some metadata in SCS, for example.

This temporal offset parameter can be incorporated as volcap-sync-offset belonging to a part of a volumetric contribution source session description, which can then be signalled properly. Thanks to the standard SCS, it should be easy for a receiver to synchronize or in another embodiment, the media server will directly carry out split-rendering task required to the client using the offset parameter in the session description.

In addition to the architecture, a spatial computing service (SCS) session description file is described, in accordance with an embodiment. This kind of spatial computing service session description file may be used with the architecture. All needed information to compose the volumetric scene may be provided, signaled and updated as a part of the spatial computing service session description file. This session description may relay signaling information and metadata from senders through a spatial computing server SCS to receivers participating in a call, for example.

According to an embodiment, the spatial computing service session description 407 may be used for signaling a volumetric contribution source session description and negotiation for low latency transmission. The signaling indicates which media streams correspond to the depth and texture for each of the contributing sources. Furthermore, the signaling indicates if one or more volumetric contribution sources belong to a common volumetric reconstruction zone. An attribute called **vcsrc_group** in this specification is provided to group the one or more media streams from a contributing source and another grouping attribute called **svcs_group** in this specification to indicate the spatial grouping of the one or more volumetric contribution sources.

The attribute **vcsrc_group** (Volumetric Contribution SouRCe), which may be provided as additional session level parameters comprise media identifiers for each of the related media line from a transmission sensor. In case there are multiple sensors behind a physical transmission device, the **vcsrc_group** also carries the intrinsic and extrinsic parameters as additional parameters with this grouping information. The intrinsic and extrinsic parameters may carry information related to cameras of a group. The intrinsic parameters represent e.g. an optical center and focal length of a camera and the extrinsic parameters represent e.g. the location and pose of a camera in a 3D scene. Such a parameter groups all the media streams corresponding to a single capture position (e.g., RGB is media stream 1, D is media stream 2). This informs the receiver that the RGB and Depth data are to be processed together for generating a volumetric representation.

The attribute **svcs_group** (Spatial Volumetric reConstruction of Sources) also carries the extrinsic parameters related to the multiple contributing sources if they can be determined by the spatial computing server. In accordance with an embodiment, the extrinsic parameters may be signaled for each of the grouping as comma separated base64 encoded values, for example. The intrinsic parameters can be signaled as a media level attribute for each of the contributing media lines (i.e. media stream in the **vcsrc_group**). This higher level grouping parameter may be introduced to indicate the set of volumetric media contributing sources (e.g., a grouping parameter which groups the RGB & D grouping) in case of a pass-through mode where all the reconstruction is done only at the receiver.

Thus, the metadata provided by the spatial computing service session description file may allow easy access by a viewer through the spatial computing service session description.

This kind of spatial computing service session description may make it easy to accept various standardized video and image formats as inputs, thus making the approach generic.

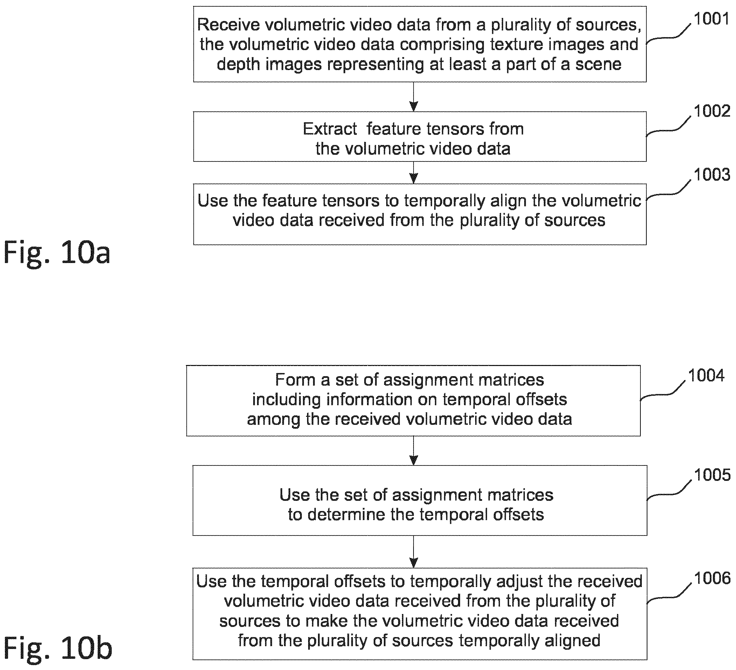

In the following, an embodiment will be described in more detail with reference to the flow diagram of Fig. 10a.

According to an embodiment, the apparatus 500 is a spatial computing server SCS. The spatial computing server SCS receives 1001 volumetric video from a plurality of sources. The volumetric video data comprises texture images and depth images representing at least a part of a scene. The spatial computing server SCS extracts 1002 feature tensors 504 from the volumetric video data. The spatial computing server SCS also uses 1003 the feature tensors 504 to temporally align the volumetric video data received from the plurality of sources.

In accordance with an embodiment, as is illustrated in the flow diagram of Fig. 10b, the spatial computing server SCS may further form 1004 a set of assignment matrices including information on temporal offsets among the received volumetric video data and use the set of assignment matrices to determine 1005 the temporal offsets. The spatial computing server SCS may also use 1006 the temporal offsets to temporally adjust the received volumetric video data received from the plurality of sources to make the volumetric video data received from the plurality of sources temporally aligned i.e. trying to remove the frame offsets.

In accordance with an embodiment, a diagonal cost representation is also implemented as a part of the attention module. This provides some form of additional spatial encoding in the attention by using diagonal representation in assignment matrix. Diagonal representation provides some inherent meaning that is useful for spatial attention focus (weight focus), provides some form of spatial encoding/meaning for attention.

The memory and the computer program code are configured to, with the at least one processor, cause the apparatus to perform the method of Fig. 10 according to various embodiments.

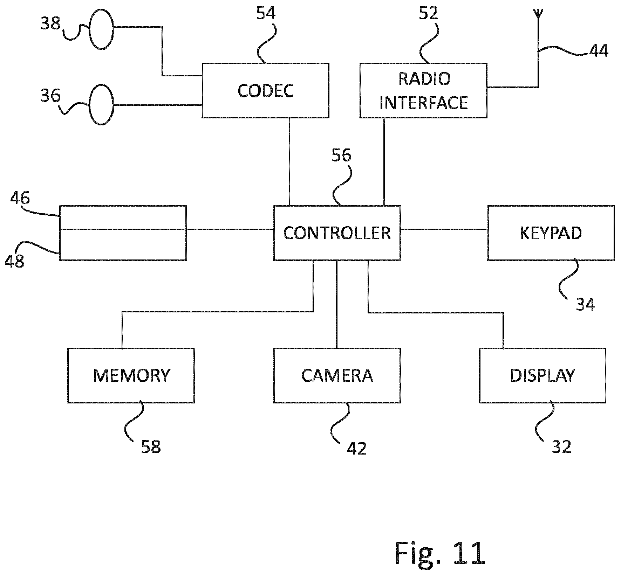

Fig. 11 shows a block diagram of a video coding system according to an example embodiment as a schematic block diagram of an electronic device 50, which may incorporate a codec. In some embodiments the electronic device may comprise an encoder or a decoder. The electronic device 50 may for example be a mobile terminal or a user equipment of a wireless communication system or a camera device. The electronic device 50 may be also comprised at a local or a remote server or a graphics processing unit of a computer. The device may be also comprised as part of a head-mounted display device. The apparatus 50 may comprise a display 32 in the form of a liquid crystal display. In other embodiments of the invention the display may be any suitable display technology suitable to display an image or video. The apparatus 50 may further comprise a keypad 34. In other embodiments of the invention any suitable data or user interface mechanism may be employed. For example, the user interface may be implemented as a virtual keyboard or data entry system as part of a touch-sensitive display. The apparatus may comprise a microphone 36 or any suitable audio input which may be a digital or analogue signal input. The apparatus 50 may further comprise an audio output device which in embodiments of the invention may be any one of: an earpiece 38, speaker, or an analogue audio or digital audio output connection. The apparatus 50 may also comprise a battery (or in other embodiments of the invention the device may be powered by any suitable mobile energy device such as solar cell, fuel cell or clockwork generator). The apparatus may further comprise a camera 42 capable of recording or capturing images and/or video. The camera 42 may be a multi-lens camera system having at least two camera sensors. The camera is capable of recording or detecting individual frames which are then passed to the codec 54 or the controller for processing. The apparatus may receive the video and/or image data for processing from another device prior to transmission and/or storage.

The apparatus 50 may comprise a controller 56 or processor for controlling the apparatus 50. The apparatus or the controller 56 may comprise one or more processors or processor circuitry and be connected to memory 58 which may store data in the form of image, video and/or audio data, and/or may also store instructions for implementation on the controller 56 or to be executed by the processors or the processor circuitry. The controller 56 may further be connected to codec circuitry 54 suitable for carrying out coding and decoding of image, video and/or audio data or assisting in coding and decoding carried out by the controller.

The apparatus 50 may further comprise a card reader 48 and a smart card 46, for example a UICC (Universal Integrated Circuit Card) and UICC reader for providing user information and being suitable for providing authentication information for authentication and authorization of the user at a network. The apparatus 50 may comprise radio interface circuitry 52 connected to the controller and suitable for generating wireless communication signals for example for communication with a cellular communications network, a wireless communications system, or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es). The apparatus may comprise one or more wired interfaces configured to transmit and/or receive data over a wired connection, for example an electrical cable or an optical fiber connection.

The various embodiments can be implemented with the help of computer program code that resides in a memory and causes the relevant apparatuses to carry out the method. For example, a device may comprise circuitry and electronics for handling, receiving, and transmitting data, computer program code in a memory, and a processor that, when running the computer program code, causes the device to carry out the features of an embodiment. Yet further, a network device like a server may comprise circuitry and electronics for handling, receiving, and transmitting data, computer program code in a memory, and a processor that, when running the computer program code, causes the network device to carry out the features of various embodiments.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as, defined in the appended claims.

**Claims**

1. An apparatus, comprising:

   means for receiving volumetric video data from a plurality of sources, the volumetric video data comprising texture images and depth images representing at least a part of a scene;
   means for extracting feature tensors from the volumetric video data; and
   means for using the feature tensors to temporally align the volumetric video data received from the plurality of sources.

2. The apparatus according to claim 1, said means for using the feature tensors comprising:

   means for forming a set of assignment matrices including information on temporal offsets among the received volumetric video data;
   means for using the set of assignment matrices to determine the temporal offsets; and
   means for using the temporal offsets to temporally adjust the received volumetric video data received from the plurality of sources to make the volumetric video data received from the plurality of sources temporally aligned.

3. The apparatus according to claim 2, wherein the temporal offset is a frame offset.

4. The apparatus according to claim 2 or 3 comprising means for
   forming the set of assignment matrices so that the temporal offsets are indicated by diagonally aligned non-zero elements as distances of the diagonally aligned non-zero elements from a diagonal of the assignment matrix.

5. The apparatus according to claim 4, said means for temporally aligning comprising:

   means for temporally shifting the volumetric video data from the plurality of sources on the basis of the temporal offsets, and
   means for combining the shifted volumetric video data.

6. The apparatus according to any of the claims 1 to 5 comprising:
   means for using a feature backbone to extract the feature tensors.

7. The apparatus according to any of the claims 1 to 6, wherein the feature tensors extracted from the volumetric video data has a shape $H \times W x T \times C$, where H and W are the height and width of the features, T is the number of frames of the volumetric video data, and C is the number of features.

8. The apparatus according to claim 7, wherein the features comprise at least one of the following:

   color attributes,
   depth,
   optical flow between frames,
   silhouette, and
   segmentation.

9. The apparatus according to any of the claims 1 to 8 comprising:

means for determining which of the plurality of sources are located near each other; and
means for grouping those sources which are determined to be located near each other into a same group.

**10.** The apparatus according to any of the claims 1 to 9, said means for extracting feature tensors from the volumetric video data comprising:
means for communicating with each other to share some information related to the volumetric video data.

**11.** A method comprising:

receiving volumetric video data from a plurality of sources, the volumetric video data comprising texture images and depth images representing at least a part of a scene;
extracting feature tensors from the volumetric video data; and
using the feature tensors to temporally align the volumetric video data received from the plurality of sources.

**12.** The method according to claim 11 comprising:

forming a set of assignment matrices including information on temporal offsets among the received volumetric video data;
using the set of assignment matrices to determine the temporal offsets; and
using the temporal offsets to temporally adjust the received volumetric video data received from the plurality of sources to make the volumetric video data received from the plurality of sources temporally aligned.

**13.** The method according to claim 12, wherein the temporal offset is a frame offset.

**14.** The method according to claim 12 or 13 comprising:
forming the set of assignment matrices so that the temporal offsets are indicated by diagonally aligned non-zero elements as distances of the diagonally aligned non-zero elements from a diagonal of the assignment matrix.

**15.** The method according to claim 14, wherein said temporally aligning comprising:

temporally shifting the volumetric video data from the plurality of sources on the basis of the temporal offsets, and combining the shifted volumetric video data.

Fig. 1

Fig. 2

K1 : Kinect Device

- - → : (Video (RGBD) & Metadata) or MIV data

CS1 : Capture Server (PC)

MS : Management Server

Fig. 3

Fig. 4

Fig. 5

EP 4 311 234 A1

Fig. 6b

f1: Dimension of [T, F], where F is the dimension of the features

Number of tokens: N*T

Diagram labels (Fig. 6b): Add norm; Feed forward; Add norm; Multi-head Cross-frame Attention; f1; f2; f3; fN

Fig. 6a

Assignment matrices for each sequence

Diagram labels (Fig. 6a): Multi-head Cross-frame Attention; Multi-head Cross-frame Attention; Multi-head Cross-frame Attention; f1; f2; fN; Feature Backbone; Seq1; Seq2; SeqN

## Fig. 7

## Fig. 8

Frame Offset illustration from assignment matrix output

The softmax operation is applied diagonally on the output matrices. For the figure, there will be 7 pass for diagonal operation on the 4 x 4 matrix:

- Pass 1 indices are: $A_{(1,1)}$, $A_{(2,2)}$, $A_{(3,3)}$, $A_{(4,4)}$
- Pass 2 indices are: $A_{(1,2)}$, $A_{(2,3)}$, $A_{(3,4)}$
- Pass 3 indices are: $A_{(1,3)}$, $A_{(3,4)}$
- Pass 4 indices are: $A_{(1,4)}$
- Pass 5 indices are: $A_{(2,1)}$, $A_{(3,2)}$, $A_{(4,3)}$
- Pass 6 indices are: $A_{(3,1)}$, $A_{(4,2)}$
- Pass 7 indices are: $A_{(4,1)}$

**Fig. 9**

EP 4 311 234 A1

**Fig. 10a**

1001 — Receive volumetric video data from a plurality of sources, the volumetric video data comprising texture images and depth images representing at least a part of a scene

1002 — Extract feature tensors from the volumetric video data

1003 — Use the feature tensors to temporally align the volumetric video data received from the plurality of sources

**Fig. 10b**

1004 — Form a set of assignment matrices including information on temporal offsets among the received volumetric video data

1005 — Use the set of assignment matrices to determine the temporal offsets

1006 — Use the temporal offsets to temporally adjust the received volumetric video data received from the plurality of sources to make the volumetric video data received from the plurality of sources temporally aligned

Fig. 11

<table>
<tr><td>Europäisches Patentamt<br>European Patent Office<br>Office européen des brevets</td><td style="text-align:center">**EUROPEAN SEARCH REPORT**</td><td>**Application Number**<br><br>**EP 23 18 5459**</td></tr>
</table>

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JENNI SIMON ET AL: "Self-supervised Multi-view Synchronization Learning for 3D Pose Estimation", 13 October 2020 (2020-10-13), TOPICS IN CRYPTOLOGY - CT-RSA 2020 : THE CRYPTOGRAPHERS' TRACK AT THE RSA CONFERENCE 2020, SAN FRANCISCO, CA, USA, FEBRUARY 24-28, 2020, PAGE(S) 170 - 187, XP047577978, | 1,6,9-11 | INV.<br>H04N13/167<br>H04N13/00 |
| Y | * section 3 Unsupervised Learning of 3D Pose-Discriminative Features and Fig. 2 | 7,8 | |
| A | section 4 Experiments * | 2-5, 12-15 | |
| | ----- | | |
| Y | MANUEL PALERMO ET AL: "Real-Time Human Pose Estimation on a Smart Walker using Convolutional Neural Networks", ARXIV.ORG, CORNELL UNIVERSITY LIBRARY, 201 OLIN LIBRARY CORNELL UNIVERSITY ITHACA, NY 14853, 28 June 2021 (2021-06-28), XP081996045, | 7,8 | |
| A | * section II. A. Materials; figures 2,7 * | 1-6,9-15 | TECHNICAL FIELDS SEARCHED (IPC) |
| | ----- | | H04N<br>G06T |
| X | WU XINYI ET AL: "Multi-Video Temporal Synchronization by Matching Pose Features of Shared Moving Subjects", 2019 IEEE/CVF INTERNATIONAL CONFERENCE ON COMPUTER VISION WORKSHOP (ICCVW), IEEE, 27 October 2019 (2019-10-27), pages 2729-2738, XP033732706, DOI: 10.1109/ICCVW.2019.00334 [retrieved on 2020-03-02] | 1-3,6, 9-13 | |
| Y | * Section 3. Our Approach * | 7,8 | |
| A | | 4,5,14, 15 | |
| | ----- | | |
| | -/-- | | |

The present search report has been drawn up for all claims

| Place of search | Date of completion of the search | Examiner |
|---|---|---|
| Munich | 13 December 2023 | Tillier, Christophe |

Europäisches
Patentamt

European
Patent Office

Office européen
des brevets

# EUROPEAN SEARCH REPORT

Application Number

**EP 23 18 5459**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GUILLERMO GALLEGO ET AL: "Event-based Vision: A Survey", ARXIV.ORG, CORNELL UNIVERSITY LIBRARY, 201 OLIN LIBRARY CORNELL UNIVERSITY ITHACA, NY 14853, 17 April 2019 (2019-04-17), XP081607933, * the whole document * | 1-15 | |

----

TECHNICAL FIELDS
SEARCHED       (IPC)

The present search report has been drawn up for all claims

| Place of search | Date of completion of the search | Examiner |
|---|---|---|
| Munich | 13 December 2023 | Tillier, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)